# EUROPÄISCHE PATENTANMELDUNG

(11) **EP 1 422 034 A1**
(43) Veröffentlichungstag der Anmeldung: **26.05.2004**
(21) Anmeldenummer: 02025900.8
(22) Anmeldetag: 19.11.2002
(51) Int. Cl.: B28D 1/04, B28D 5/04

(54) **Verfahren zur Bearbeitung eines Bauteils**

(71) Anmelder: SIEMENS AKTIENGESELLSCHAFT, 80333 München (DE)
(72) Erfinder: Bublath, Boris, 13581 Berlin (DE); Daus, Nikolai-Alexander, 10439 Berlin (DE)

(57) **Zusammenfassung**

Verfahren zur Bearbeitung eines Bauteils nach dem Stand der Technik erreichen oft nicht die gewünschte Geometrie, weil das Werkzeug zur Herstellung eines Lochs unkontrollierte Bewegungen ausführt, oder zu einer thermischen Beeinflussung des Bauteils führt.

Durch das erfindungsgemäße Verfahren, bei dem ein Hohlwerkzeug zum Schleifen verwendet wird und gleichzeitig mit Ultraschall angeregt wird, werden die Nachteile überwunden.

## Beschreibung

Die Erfindung betrifft ein Verfahren zur Bearbeitung eines Bauteils gemäß des Oberbegriffs des Anspruchs 1.

Bauteile, die bspw. gegossen oder gesintert worden sind, werden oft noch mit Veränderungen, wie z.B. Löchern versehen. Bei der Herstellung dieser Löchern kommt es darauf an, dass die gewünschte Geometrie des Lochs nicht durch unkontrollierte Bewegungen des Werkzeuges ausser Kontrolle gerät und/oder auch nicht durch eine Wechselwirkung des Werkzeuges mit dem Bauteil die Trennfläche zwischen Bauteil und Werkzeug, beispielsweise thermisch, so beeinflusst wird, dass ungewünschte Veränderungen an dem Bauteil in der Nähe der Trennfläche entstehen.

Die DE 100 64 266 A1 offenbart ,ein Verfahren zur Verringerung der Varianz im Kühlmediumverbrauch an Komponenten einer Strömungsmaschine, bei dem in einem vorhandenen Loch die Oberflächenrauhigkeit durch mechanische Nachbearbeitung verringert wird. Dabei werden stiftförmige Werkzeuge verwendet, die durch Ultraschalleinkopplung in hochfrequente Schwingungen versetzt werden.

Die DE 41 04 350 A1 offenbart ein Ultraschallbearbeitungsverfahren, bei dem ein stiftförmiges Werkzeug zum Bohren verwendet wird.

Bei dem genannten Verfahren besteht oft das Problem, dass die gewünschte Geometrie der Veränderung am Bauteil nicht erreicht wird und/oder durch zu hohe thermische Belastung der Trennfläche zwischen Werkzeug und Bauteil zu einer Beeinflussung dieser Trennfläche führt.

Es ist daher Aufgabe der Erfindung diese Probleme zu überwinden.

Die Aufgabe wird gelöst durch ein Verfahren zur Bearbeitung eines Bauteils gemäß des Anspruchs 1.

Weitere vorteilhafte Verfahrensschritte sind in den Unteransprüchen aufgelistet.

Es zeigen
- Figur 1: eine Vorrichtung, um das erfindungsgemäße Verfahren durchzuführen und
- Figur 2,3: Bauteile, die mittels des erfindungsgemäßen Verfahrens bearbeitet worden sind,
- Figur 4: ein Werkzeug und ein Bauteil im teilweise verarbeiteten Zustand.

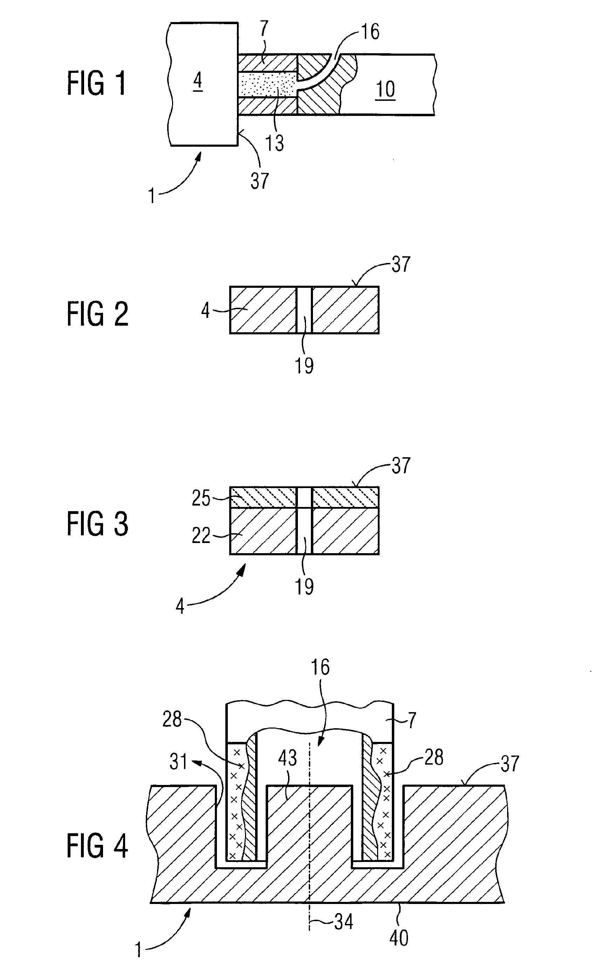

Figur 1 zeigt eine beispielhafte Vorrichtung 1, um das erfindungsgemäße Verfahren durchzuführen.

Die Vorrichtung 1 weist unter anderem eine Maschine 10 auf, an dessen Spitze ein Schleifkörper (Werkzeug) in Form eines Hohlwerkzeugs 7 angeordnet ist. Die Maschine 10 kann das Hohlwerkzeug 7 in Drehbewegung versetzen und mit Ultraschall erregen.

Das Hohlwerkzeug ist beispielsweise ein an der inneren und äußeren Mantelfläche und an der Stirnseite mit Diamant beschichteter Hohlzylinder.

Mit einer solchen Vorrichtung 1 wird an einem Bauteil 4 eine Durchgangsbohrung 19 (Figur 2) oder ein Sackloch 19 erzeugt. Dabei wird das Hohlwerkzeug 7 in Drehbewegung versetzt und auf eine Oberfläche 37 des Bauteils 4 angesetzt, so dass ein Schleifvorgang an der Oberfläche 37 des Bauteils 4 einsetzt.

Die Ultraschallerregung erfolgt vorzugsweise von Anfang an, kann bei Bedarf aber auch erst dann eingeschaltet werden, wenn eine bestimmte Tiefe des Bohrungslochs 19 erreicht ist.

Der Winkel zwischen der Längsachse 34 (Fig. 4) des Hohlwerkzeugs 7 und der Oberfläche 37 des Bauteils 4 kann rechtwinklig sein, aber auch andere Größen einnehmen.

Durch zumindest eine Zu- bzw. Abführung 16 an der Maschine 10 kann unter anderem das Hohlwerkzeug 7 im Innern gekühlt werden, so dass auch die Wechselwirkungszone zwischen dem Hohlwerkzeug 7 und dem Bauteil 4 gekühlt wird und es zu keiner oder nur einer geringen thermischen Belastung des Bauteils 4 in dieser Wechselwirkungszone kommt. Somit werden unerwünschte Veränderungen der Wechselwirkungszone zwischen Hohlwerkzeug 7 und Bauteil 4 vermieden.

Ebenso kann durch die Zuführung 16 oder eine andere separate Zuführung das Material 13, das beim Schleifen des Bauteils 4 entsteht, abgeführt werden. Dies geschieht beispielsweise dadurch, dass eine Flüssigkeit zugeführt wird, die sich mit dem Material 13 vermischt, so dass die Mischung aus Material 13 und der Flüssigkeit ausgespült wird. Die Abführung des Materials 13 erzielt bessere Schleifergebnisse.

Figur 4 zeigt das Hohlwerkzeug 7 und das Bauteil 1 im teilweise verarbeiteten Zustand.

Das Hohlwerkzeug 7 weist an einem radialen Ende einen Schleifbelag 28 auf, mit dem das Material 13 von dem Bauteil 1 abgetrennt wird.
Der Schleifbelag 28 ist bspw. eine Beschichtung auf einem Hohlkörper. Das Hohlwerkzeug 7 kann aber auch aus zwei zusammengesetzten Hohlkörpern bestehen, wobei der eine massiv aus Schleifmaterial besteht.
Der Schleifvorgang wird auf einer Oberfläche 37 des Bauteils 1 gestartet.
Wenn die der Oberfläche 37 gegenüberliegende Seite 40 erreicht ist, ist das Durchgangsloch 19 fertig hergestellt.

Wenn man ein Sackloch herstellt, so kann die Bearbeitung in diesem Zustand (Fig. 4) abgebrochen werden und der innere Kern 43, der innerhalb des Hohlwerkzeugs 7 angeordnet ist, kann auf einfache Art und Weise z. B. herausgebrochen und entfernt werden.

Das Material 13, das abgetrennt wird, kann sowohl über das Innere des Hohlwerkzeugs 7 entfernt werden als auch an den äußeren Seitenflächen des Hohlwerkzeugs 7 entweichen, wie es durch den Pfeil 31 dargestellt ist. Insbesondere die Überlagerung der Schleifbewegungen mit einer Ultraschallanregung führt zu einem guten Materialäbtrag und zur verbesserten Abfuhr des abgetrennten Materials 13. Das abgetrennte Material 13 kann eine pulverisierte Form aber auch Partikel oder Späne aufweisen.

Figur 2 zeigt ein Bauteil 4, das mit dem erfindungsgemäßen Verfahren hergestellt worden ist.

Das Bauteil 4 ist beispielsweise aus Metall oder einem spröden Material, wie z. B. einer Keramik. In dem Bauteil 4 ist ein Durchgangsloch 19 erzeugt worden. Ebenso kann mit dem erfindungsgemäßen Verfahren auch ein Sackloch in dem Bauteil 4 erzeugt werden.

Figur 3 zeigt ein weiteres Bauteil 4, das mit dem erfindungsgemäßen Verfahren bearbeitet worden ist.

Das Bauteil 4 besteht aus einem Substrat 22, auf dem zumindest eine Schicht 25 angeordnet ist. Das Durchgangsloch 19 ist durch die Schicht 25 und das Substrat 22 erzeugt worden.

Das Substrat 22 und die Schicht 25 können unterschiedlich hart sein, das heißt, die Schicht 25 ist beispielsweise spröde, wie z. B. bei einer keramischen Deckschicht, und das Substrat 22 weist ein metallisches Material auf.

Ebenso kann das Schichtsystem auch mehrere Schichten aufweisen.

Das erfindungsgemäße Verfahren eignet sich ganz besonders zur Bearbeitung von herkömmlichen Turbinenschaufelwerkstoffen und Titanaluminiden, bei denen tiefe Löcher mit vergleichsweise kleinem Durchmesser nur mit großem Aufwand und/oder in unzureichender Qualität herstellbar waren.

## Patentansprüche

1. Verfahren zur Bearbeitung eines Bauteils mittels eines Schleifkörpers,
bei dem ein Schleifkörper gedreht und zumindest zeitweise in Ultraschallerregung versetzt wird,
**dadurch gekennzeichnet, dass**
als Schleifkörper ein Hohlwerkzeug (7) verwendet wird.

2. Verfahren nach Anspruch 1,
**dadurch gekennzeichnet, dass**
dass bei der Bearbeitung des Bauteils (7) ein Loch (19) erzeugt wird, und
dass das Hohlwerkzeug (7) ab einer bestimmten Tiefe des Lochs (19) in Ultraschallerregung versetzt wird.

3. Verfahren nach Anspruch 1,
**dadurch gekennzeichnet,**
**dass** bei der Bearbeitung des Bauteils (4) ein Loch (19) erzeugt wird, und
das Hohlwerkzeug (7) von Anfang an in Ultraschallerregung versetzt wird.

4. Verfahren nach Anspruch 1,
**dadurch gekennzeichnet, dass**
das Verfahren mit einem metallischen Bauteil (4) durchgeführt wird.

5. Verfahren nach Anspruch 1,
**dadurch gekennzeichnet, dass**
das Verfahren mit einem spröden Bauteil (4) durchgeführt wird.

6. Verfahren nach Anspruch 1,
**dadurch gekennzeichnet, dass**
das Verfahren mit einem Schichtsystem als Bauteil (4) durchgeführt wird.

7. Verfahren nach Anspruch 6,
**dadurch gekennzeichnet, dass**
das Verfahren mit einem Schichtsystem als Bauteil (4) durchgeführt wird,
das eine spröde Schicht (25) aufweist.

8. Verfahren nach Anspruch 1,
**dadurch gekennzeichnet, dass**
das Material (13), das abgetrennt wird, durch das Innere des Hohlwerkzeugs (7) entfernt wird.

9. Verfahren nach Anspruch 1,
**dadurch gekennzeichnet, dass**
das Hohlwerkzeug (7) von innen gekühlt wird.
